# EUROPEAN PATENT APPLICATION

(11) **EP 4 725 813 A1**
(43) Date of publication of application: **15.04.2026**
(21) Application number: 24315469.7
(22) Date of filing: 10.10.2024
(51) Int. Cl.: B62D 55/06, B62D 55/112

(54) **A VEHICLE**

(71) Applicant: CNH Industrial France S.A.S., 91150 Morigny-Champigny (FR)
(72) Inventor: Le Brech, Laurent, 91150 Morigny-Champigny (FR); Paloma, Rodriguez, 91150 Morigny-Champigny (FR)
(74) Representative: CNH Industrial IP Department

(57) **Abstract**

A vehicle comprising a vehicle body, an actuator system, a first track assembly and a second track assembly. The first track assembly and second track assembly support the vehicle body above a substrate. The first track assembly and second track assembly each comprise a continuous drive track. An actuator system is operable to vary the distribution of track pressure along each continuous drive track to thereby adjust direction of travel of the vehicle.

## Description

The present disclosure relates to a vehicle.

### BACKGROUND OF THE INVENTION

Tracked vehicles are commonly used on soft agricultural terrain, for example in crop growing fields. Typically they have a continuous band of treads or track plates carried by wheels. The surface area of the tracks distributes the vehicle weight over a large area such that the vehicle is less likely to sink into soft ground (and hence, for example, become stuck) than a wheeled vehicle.

A problem that arises with a tracked vehicle is that traction between each continuous track and the ground may vary. This is especially likely to occur when the vehicle is travelling along an inclined surface where the weight of the vehicle is inherently unevenly distributed between the tracks. Alternatively, it may occur if the ground under one track has a different consistency to the ground under the other track. Under these circumstances the vehicle may turn or slide away from its intended direction of travel, which is referred to as "lateral drift" (e.g., at least part of the vehicle drifting sideways, causing it to steer away from the desired direction of travel). This is undesirable as control of the vehicle is less precise and less predictable than may be required.

In some applications, for example where agricultural vehicles are used to travel between rows of crops, there may be limited space to manoeuvre a tracked vehicle. Lateral drift and the effect on direction control may cause collision between a vehicle and the crops, resulting in agricultural losses and/or damage to the vehicle.

Hence a vehicle which is configured to enable greater directional control compared to examples of the related art, is highly desirable.

### SUMMARY OF THE INVENTION

According to the present disclosure there is provided an apparatus and method as set forth in the appended claims. Other features of the invention will be apparent from the dependent claims, and the description which follows.

Accordingly there may be provided a vehicle (100) comprising a vehicle body (168) which extends along an x-axis, a first end (206) of the vehicle body (168) and a second end (208) of the vehicle body (168) being spaced apart from one another along the x-axis; the vehicle body (168) extending along a y-axis, a first side (202) of the vehicle body (168) and a second side (204) of the vehicle body (168) spaced apart from one another along the y-axis; the x-axis being at right angles to the y-axis; the vehicle body (168) extending along a z-axis, the z-axis being at right angles to the x-axis and y-axis, an upper side (210) of the vehicle body (168) and a lower side (212) of the vehicle body (168) spaced apart from one another along the z-axis.

Along the first side (202) and the second side (204) of the vehicle body (168) there may be provided a first track assembly (102) and a second track assembly (104) respectively, each of the first track assembly (102) and the second track assembly (104) being coupled to the vehicle body (168) so as to support the vehicle body (168) above a substrate (108).

Each of the first track assembly (102) and the second track assembly (104) may comprise a first track support wheel (128) and a second track support wheel (130) spaced apart from one another along the x-axis,

Each of the first track assembly (102) and the second track assembly (104) may comprise a continuous drive track (132, 134) carried by the drive track support wheels (128, 130).

Each continuous drive track (132, 134) may be configured for distributing a track pressure (Pt) induced by a downward force of the vehicle over the area of each continuous drive track (132, 134) in contact with the substrate (108) to thereby support the vehicle (100) on the substrate (108).

The vehicle (100) may further comprise an actuator system (300).

The actuator system (300) may be operable to vary the distribution of the track pressure (Pt) along the continuous drive track (132) of the first track assembly (102).

The actuator system (300) may be operable to vary the distribution of the track pressure (Pt) along the continuous drive track (134) of the second track assembly (104).

The z-axis may define a vehicle body yaw axis.

The vehicle (100) may be operable to control yaw of the vehicle body (168) as the vehicle is moving by controlling the actuator system (300) to alter the distribution of the track pressure (Pt) along the continuous drive track (132) of the first track assembly (102).

The vehicle (100) may be operable to control yaw of the vehicle body (168) as the vehicle is moving by controlling the actuator system (300) to alter the distribution of the track pressure (Pt) along the continuous drive track (134) of the second track assembly (104).

The vehicle (100) may comprise a direction control system (400) operable to generate a direction control signal (Sac).

The actuator system (300) may be operable to receive the direction control signal (Sac) from the direction control system (400), and in dependence of the actuator control signal (Sac) be operable to alter the distribution of the track pressure (Pt) along the continuous drive track (132) of the first track assembly (102) and/or alter the distribution of the track pressure (Pt) along the continuous drive track (134) of the second track assembly (104) to thereby control rotation of the vehicle body (168) in the x-y plane defined by the x-axis and y-axis.

The first track assembly (102) and the second track assembly (104) may be pivotably mounted to the vehicle body (168) such that they are moveable relative to the vehicle body (168) and moveable relative to each other in a x-z plane defined by the x-axis and the z-axis.

The vehicle (100) may further comprise a spreader bar (110) extending between, and coupled to, each of the first track assembly (102) and the second track assembly (104).

The vehicle (100) may further comprise a cross member (118) extending between, and coupled to, each of the first track assembly (102) and the second track assembly (104).

The spreader bar (110) and the cross member (118) may be spaced apart from one another in a direction along the x-axis.

The actuator system (300) may be operable to selectively induce a force (F) acting on the spreader bar (110) in a direction towards the substrate (108), so as to control the distribution of track pressure (Pt) acting between the vehicle (100) and the substrate (108) along the continuous drive track (132, 134) of each of the first track assembly (102) and the second track assembly (104).

The value of the force (F) induced may be variable in dependence of the actuator control signal (Sac) to thereby control rotation of the vehicle body (168) in the x-y plane defined by the x-axis and y-axis.

The actuator system (300) may be configured and located to induce the force (F) on the spreader bar (110) closer to the first track assembly (102) or the second track assembly (104) than to a mid point along the spreader bar (110) between the first track assembly (102) and the second track assembly (104).

The spreader bar (110) may be coupled to the first track assembly (102) by a first pivot joint (112). The spreader bar (110) may be coupled to the second track assembly (104) by a second pivot joint (114).

The first pivot joint (112) and/or the second pivot joint (114) may comprise a ball joint.

The actuator system (300) may comprise a first spreader bar actuator (500) which extends between the spreader bar (110) and the vehicle body (168) such that the first spreader bar actuator (500) is operable to react against the vehicle body (168) to induce a force (F) on the spreader bar.

The actuator system (300) may comprise a second spreader bar actuator (502) which extends between the spreader bar (110) and the vehicle body (168) such that the second spreader bar actuator (502) is operable to react against the vehicle body (168) to induce a force (F) on the spreader bar (110).

The first spreader bar actuator (500) may be spaced apart from the second spreader bar actuator (502) along the length of the spreader bar (110) such that the first spreader bar actuator (500) is provided closer to the first track assembly (102) than to the second track assembly (104).

The first spreader bar actuator (500) may be spaced apart from the second spreader bar actuator (502) along the length of the spreader bar (110) such that the second spreader bar actuator (502) is provided closer to the second track assembly (104) than to the first track assembly (102).

The vehicle body (168) may be coupled to each of the first track assembly (102) and the second track assembly (104) via a third pivot joint (116) which couples the spreader bar (110) to the vehicle body (168).

The vehicle body (168) may be coupled to each of the first track assembly (102) and the second track assembly (104) via a fourth pivot joint (126) and a fifth pivot point joint (129) which couples the vehicle body (168) to the cross member (118).

The third pivot joint (116) may be configured to be moveable along the spreader bar (110) between a first position (P1) and second position (P2) on the spreader bar (110).

The actuator system (300) may be operable to move the third pivot joint (116) along the spreader bar (110) between the first position (P1) and the second position (P2) so as to control the distribution of track pressure (Pt) acting between the vehicle (100) and the substrate (108) along the continuous drive track (132, 134) of each of the first track assembly (102) and the second track assembly (104).

The actuation system (300) may comprise a third pivot joint actuator (504) mounted and configured to move the third pivot joint (116) along the spreader bar (110) between the first position (P1) and the second position (P2) in dependence of the actuator control signal (Sac).

The fourth pivot joint (126) may be configured to be moveable along the cross member (118) between a first position (P1) and second position (P2) on the cross member (118), and the fifth pivot joint (129) may be configured to be moveable along the cross member (118) between a third position (P3) and fourth position (P4) on the cross member (118), such that at the same time as the third pivot joint (116) moves along the spreader bar (110) between the first position (P1) and the second position (P2) on the spreader bar (110), the fourth pivot joint (126) moves along the cross member (118) between the first position (P1) and the second position (P2) on the cross member (118) and the fifth pivot joint (129) moves along the cross member (118) between a third position (P3) and fourth position (P4) on the cross member (118).

The fourth pivot joint (126) may be configured to be constrained to pivot about a first position (P1) on the cross member (118). The fifth pivot joint (129) may be configured to be constrained to pivot about a third position (P3) on the cross member (118).

The third pivot joint (116) may be coupled to the vehicle body (168) via a mounting rail (170), the mounting rail (170) extending parallel to the spreader bar (110) and being fixed relative to the vehicle body (168), the third pivot point joint (116) being slideably mounted to the mounting rail (170) such that as the third pivot joint (116) moves along the spreader bar (110) between the first position (P1) and the second position (P2), the third pivot joint (116) moves along the mounting rail (170).

The distance between the first position (P1) and the second position (P2) on the spreader bar (110) may be at least 5% but not more than 25% of the length of the spreader bar (110).

The first position (P1) may be located at least 15% but no more than 35% of the way along the spreader bar (110) from the first track assembly (102) to the second track assembly (104). The second position (P2) may be located at least 15% but no more than 35% of the way along the spreader bar (110) from the second track assembly (104) to the first track assembly (102).

Each track assembly (102, 104) may further comprise a track support member (140) provided between the first track support wheel (128) and the second track support wheel (130). The track support member (140) may be located such that it is spaced apart from the substrate (108) by the continuous drive track (132, 134).

The actuator system (300) may be operable to induce a force (F) on the track support member (140) towards the substrate (108) to alter the distribution of the track pressure (Pt) along the continuous drive track (132, 134).

Each track assembly (102, 104) may further comprise one or more additional track support members (140) provided between the first track support wheel (128) and the second track support wheel (130). Each additional track support member (140) may be located such that it is spaced apart from the substrate (108) by the continuous drive track (132, 134).

The actuator system (300) may be operable to induce a force (F) on each track support member (140) independently of each other track support member (140) and the actuator system (300) is operable to induce the same or different force (F) on each track support member (140) to alter the distribution of the track pressure (Pt) along the continuous drive track (132, 134).

Each track support member (140) may be provided with a track support member actuator (506) which forms part of the actuation system (300). The or each track support member actuator (506) may be mounted and configured to induce a force (F) on its respective track support member (140) in dependence of the actuator control signal (Sac).

Each continuous drive track (132, 134) may be configured to maintain a constant surface area in contact with the substrate (108).

The vehicle may be provided as an agricultural vehicle.

There may be provided an agricultural equipment assembly (2000) comprising the vehicle (100) according to the present disclosure and an agricultural tool (106) coupled to the vehicle (100). The agricultural tool (106) may be operable to engage with the substrate (108) or engage with an object coupled to the substrate (108), such that the agricultural tool (106) exerts a force on the vehicle (1000) during the engagement.

There may be provided a method of adjusting a direction of travel of a moving vehicle (100), the vehicle (100) comprising: a vehicle body (168) supported on a first track assembly (102) and a second track assembly (104); an actuator system (300); a direction control system (400); whereby in response to the direction control system (400) detecting an unscheduled lateral movement of the vehicle (100), the direction control system (400) generates a direction control signal (Sac); the actuator system (300) receives the direction control signal (Sac) from the direction control system (400), and in dependence of the direction control signal (Sac), the actuator system (300): alters a distribution of track pressure (Pt) along a continuous drive track (132) of the first track assembly (102) and/or alters a distribution of track pressure (Pt) along the continuous drive track (134) of the second track assembly (104), to thereby control rotation of the vehicle body (168) in the x-y plane defined by the x-axis and y-axis.

An agricultural tool (106) may be coupled to the vehicle (100). The method may comprise the steps of engaging the agricultural tool (106) with a substrate (108) or engaging the agricultural tool (106) with an object coupled to a substrate (108), such that the agricultural tool (106) exerts a tool force (Ft) on the vehicle (1000) during the engagement, and controlling the actuation system (300) to control the direction of travel of vehicle (100) while the vehicle is moving and while the tool force is induced on the vehicle (100).

Hence there is provided a vehicle which is configured to enable greater directional control compared to examples of the related art.

### BRIEF DESCRIPTION OF THE DRAWINGS

Examples of the present disclosure will now be described with reference to the accompanying drawings, in which:
Figure 1 shows a schematic illustration of a vehicle in use according to the present disclosure;
Figure 2 is a schematic plan view of part of a first example of a vehicle according to the present disclosure;
Figure 3 is an end view of part of a vehicle according to the present disclosure;
Figure 4 is a schematic plan view of part of a second example of a vehicle according to the present disclosure;
Figure 5 is a schematic plan view of part of a third example of a vehicle according to the present disclosure;
Figure 6 is a side view of a track assembly of a vehicle according to the present disclosure showing a distribution of track pressure along the continuous drive track of the second track assembly;
Figure 7 is a side view of a track assembly of a vehicle according to the present disclosure showing a distribution of track pressure along the continuous drive track of the second track assembly;
Figure 8 is an end view of a pair of track assemblies of a vehicle according to the present disclosure;
Figure 9 is a perspective view of track assemblies of a vehicle according to the present disclosure;
Figure 10 is an end view of a pair of track assemblies of a vehicle according to the present disclosure;
Figure 11 is a schematic end view of a vehicle according to the present disclosure;
Figure 12 is a side view of part of a fourth example of a vehicle according to the present disclosure; and
Figure 13 is a schematic illustration of a method of controlling a direction of travel of a vehicle according to the present disclosure.

### DETAILED DESCRIPTION OF THE DRAWINGS

The present disclosure relates to a tracked vehicle. The present disclosure relates to a method of adjusting a direction of travel of a tracked vehicle.

The "vehicle" may be provided as an apparatus configured to move in a controlled manner over a substrate, in particular over the ground. The vehicle may be provided as an agricultural vehicle. As will be described, a "tracked vehicle" may be understood to be a vehicle comprising at least one continuous drive track extending between and around a set of wheels to form a track assembly. The track is located between the wheels and the substrate. The vehicle may comprise propulsion means (e.g. a motor) operably coupled to one or more wheels, the wheels configured to engage with and move the track relative to the vehicle and hence move the vehicle along the substrate.

As is understood in the art, the provision of track assemblies allows for the weight of the vehicle to be distributed over a large surface area of contact between the track assemblies and the substrate. This reduces the impact of the vehicle on the substrate such that the vehicle is less likely to sink and/or become stuck. These qualities make the vehicle suitable for use in agricultural processes, especially where soil is soft or where the ground is inclined and/or uneven.

The arrangement of a first track assembly along the first side of the vehicle body and a second track assembly along the second side of the vehicle body allows the vehicle weight and traction to be distributed between the two sides of the vehicle. Differential steering can thus be used to move the vehicle, such that it can be controlled to turn and travel in a straight line.

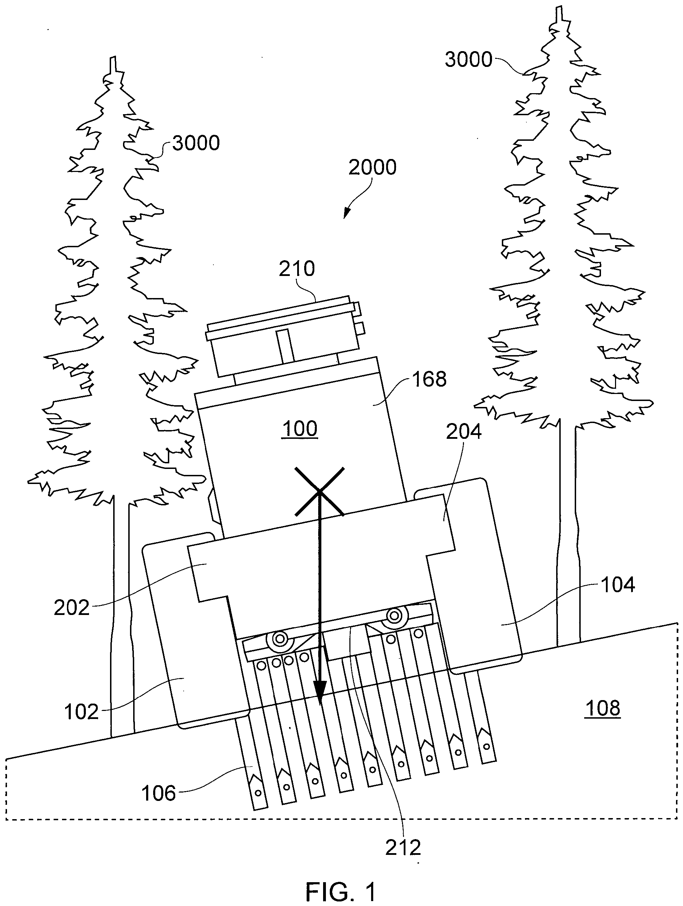

Figure 1 shows a schematic illustration of a tracked vehicle 100 according to the present disclosure, wherein the vehicle 100 is supported by a substrate 108 (e.g. the ground) and carrying out an agricultural process between rows of crops 3000. In the example shown, the substrate 108 is inclined at an angle to the horizontal, with the vehicle travelling along the incline. However, the configuration of the vehicle according to the present disclosure is also advantageous when the vehicle is travelling up an incline, down an incline or on the flat.

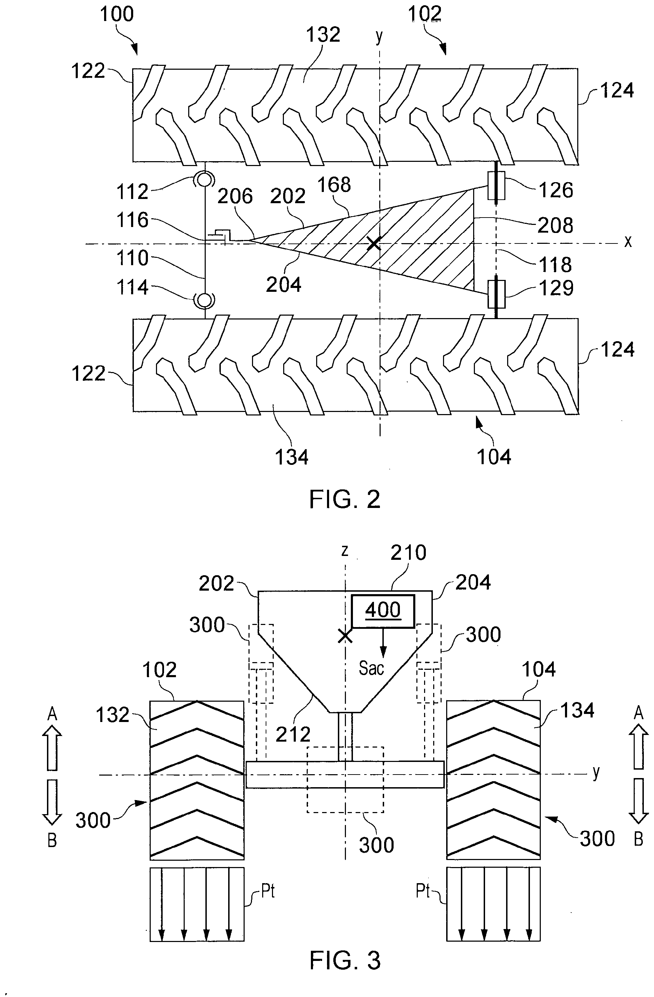

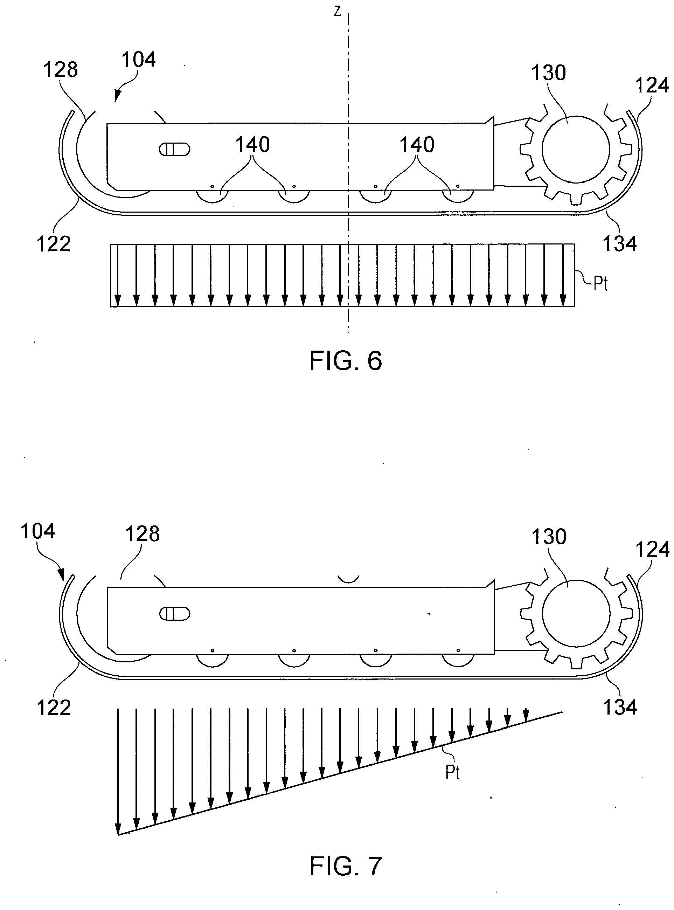

Figure 1 shows an end on view of the vehicle 100 (e.g. front or rear). Figures 2, 4, 5 are plan view of features of different examples of the vehicle 100. Figure 3 shows an end view of features of the vehicle 100. Figures 6, 7 show side views of features of the vehicle 100. As will be apparent, some features of the vehicle are not shown in the figures.

As shown in figures 1 to 5, 11 the vehicle 100 comprises a vehicle body 168. As illustrated in figures 2, 4, 5, the vehicle body 168 extends along an x-axis, a first end 206 of the vehicle body 168 and a second end 208 of the vehicle body 168 being spaced apart from one another along the x-axis. As illustrated in figures 2, 4, 5, the vehicle body 168 extends along a y-axis, a first side 202 of the vehicle body 168 and a second side 204 of the vehicle body 168 spaced apart from one another along the y-axis. As illustrated in figures 3, 6, 7, the vehicle body 168 extends along a z-axis. An upper side 210 of the vehicle body 168 and a lower side 212 of the vehicle body 168 are spaced apart from one another along the z-axis. The x-axis is at right angles to the y-axis. The z-axis is at right angles to the x-axis and y-axis.

As illustrated in figures 1 to 12, the first side 202 of the vehicle body 168 is provided with a first track assembly 102 and the second side 204 of the vehicle body 168 is provided with a second track assembly 104. Each of the first track assembly 102 and the second track assembly 104 are coupled to the vehicle body 168 so as to support the vehicle body 168 above a substrate 108.

As illustrated in figures 6, 7, 9, 11, 12 each of the first track assembly 102 and the second track assembly 104 may comprise a first track support wheel 128 and a second track support wheel 130 spaced apart from one another along the x-axis and a continuous drive track 132, 134 carried by the drive track support wheels 128, 130. Hence each continuous drive track 132, 134 may extend in a direction along the x-axis between the first track support wheel 128 and the second track support wheel 130.

At least one of the first track support wheel 128 and a second track support wheel 130 may configured as drive wheels which are engaged with the respective continuous drive track 132, 134 and driveable by a motor to thereby drive the respective continuous drive track 132, 134 and hence being operable to move the respective track assembly 102, 104, and hence move the vehicle 100.

Each continuous drive track 132, 134 may be configured for distributing a track pressure Pt induced by a downward force of the vehicle over the area of each continuous drive track 132, 134 in contact with the substrate 108 to thereby support the vehicle 100 on the substrate 108.

In each example of the present disclosure, the vehicle 100 may further comprise an actuator system 300. The actuator system 300 may be operable to vary the distribution of the track pressure Pt along the continuous drive track 132 of the first track assembly 102. The actuator system 300 may be operable to vary the distribution of the track pressure Pt along the continuous drive track 134 of the second track assembly 104. In this way, any loss of traction due to the nature of the terrain may be countered or at least mitigated.

A distribution of the track pressure Pt "along" each track assembly 102, 104 (and/or their respective continuous drive track 132, 134) refers to a distribution of the track pressure Pt along the x-axis. Hence the actuator system 300 may be operable to vary the distribution of the track pressure Pt along the continuous drive track 132 of the first track assembly 102 in a direction along the x-axis and/or the actuator system 300 is operable to vary the distribution of the track pressure Pt along the continuous drive track 134 of the second track assembly 104 in a direction along the x-axis.

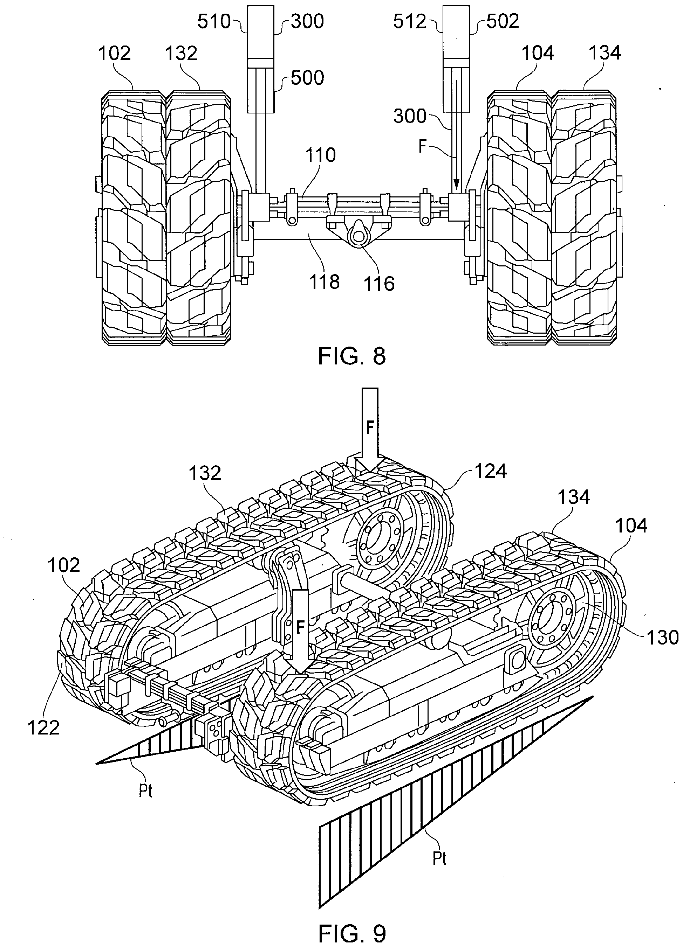

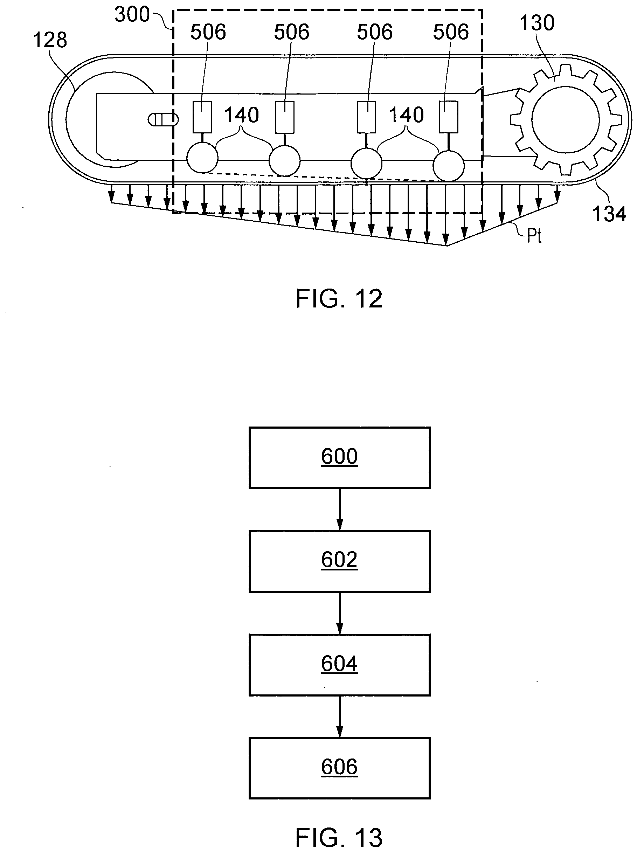

In figures 3, 6 there is illustrated an even track pressure provided along the continuous drive track 132, whereas in figures 7, 9 the distribution of track pressure Pt varies along the length of the continuous drive track 132, the pressure being greater at one end than the other, and gradually changing along the length of the continuous drive track 132. In figure 12 the distribution of track pressure Pt varies along the length of the continuous drive track 132, starting at a minimum at one end, increasing to a maximum and then reducing back to a minimum. How this may be achieved will be described below.

In each example of the present disclosure, the vehicle 100 may be operable to control rotation of the vehicle body 168 in a x-y plane defined by the x-axis and y-axis by controlling the actuator system 300 to alter the distribution of the track pressure Pt along the continuous drive track 132 of the first track assembly 102 and/or by controlling the actuator system 300 to alter the distribution of the track pressure Pt along the continuous drive track 134 of the second track assembly 104. That is to say, the directional control of the vehicle (i.e. rotation about the z-axis) may be achieved by varying the distribution of the track pressure Pt along the continuous drive tracks 132, 134.

The z-axis may define a vehicle body yaw axis. The vehicle 100 may be operable to control yaw of the vehicle body 168 as the vehicle is moving by controlling the actuator system 300 to alter the distribution of the track pressure Pt along the continuous drive track 132 of the first track assembly 102 and/or by controlling the actuator system 300 to alter the distribution of the track pressure Pt along the continuous drive track 134 of the second track assembly 104.

The or each continuous drive track 132, 134 may be configured to maintain a constant surface area in contact with the substrate 108.

The or each continuous drive track 132, 134 may be configured such that the surface area of the or each continuous drive track 132, 134 in contact with the substrate 108 remains substantially constant as the vehicle is moving.

The or each continuous drive track 132, 134 may have a fixed configuration such that the surface area of each continuous drive track 132, 134 in contact with the substrate 108 remains substantially constant during operation of the vehicle 100.

Hence, as the or each continuous drive track 132, 134 moves relative to the vehicle (and hence as the or each continuous drive track 132, 134 moves relative to their respective first track support wheel 128 and second track support wheel 130) and hence as the vehicle moves along and/or relative to the substrate 108, the surface area of each continuous drive track 132, 134 in contact with the substrate 108 may be maintained to be substantially constant.

As illustrated in figure 3, the vehicle 100 may comprise a direction control system 400 operable to generate a direction control signal Sac. By way of non-limiting examples, possible locations of different examples and/or elements of the actuator system 300 are indicated in figure 3 in dashed lines. The actuator system 300 may be operable to receive the direction control signal Sac from the direction control system 400, and in dependence of the actuator control signal Sac, the actuator system 300 may be operable to alter the distribution of the track pressure Pt along the continuous drive track 132 of the first track assembly 102 and/or alter the distribution of the track pressure Pt along the continuous drive track 134 of the second track assembly 104 to thereby control rotation of the vehicle body 168 in the x-y plane defined by the x-axis and y-axis (i.e. rotation about the z-axis).

The direction control system may comprise high precision Global Positioning System (GPS) / Real-Time Kinematic (RTK) equipment to generate data which may be used to determine direction of travel and changes in direction.

The direction control system may comprise radar (e.g. stereo radar) or Light Detection and Ranging (lidar) systems, which may determine direction of travel and changes in direction based on observed changes, for example by correlating consecutive images taken with radar (e.g. stereo radar) or Light Detection and Ranging (lidar) systems.

The direction control system may comprise a digital compass to generate data which may be used to determine direction of travel and changes in direction.

The direction control system may, in dependence of data received from the above examples, or other suitable equipment, calculate deviation from a target/intended/desired direction and generate the direction control signal (Sac).

The first track assembly 102 and the second track assembly 104 may be pivotably mounted to the vehicle body 168 such that they are moveable relative to the vehicle body 168 and moveable relative to each other in a x-z plane defined by the x-axis and the z-axis. This relative motion is illustrated in figure 3 by arrows A, B.

For example, and as illustrated in figures 2, 4, 5, 8, 11, the first track assembly 102 and the second track assembly 104 may be pivotably mounted to the vehicle body 168 via pivot joints, for example a first pivot joint 112, a second pivot joint 114, a third pivot joint 116, a fourth pivot joint 126 and/or a fifth pivot joint 129 as will be described below with reference to the different examples.

As illustrated in figures 2 to 5, 8 to 11 the vehicle 100 may comprise a spreader bar 110 extending between, and coupled to, each of the first track assembly 102 and the second track assembly 104. The vehicle 100 may further comprise a cross member 118 extending between, and coupled to, each of the first track assembly 102 and the second track assembly 104. As illustrated in the figures, the spreader bar 110 and the cross member 118 may be spaced apart from one another in a direction along the x-axis.

The spreader bar 110 may be coupled to the first track assembly 102 by a first pivot joint 112. The spreader bar 110 may be coupled to the second track assembly 104 by a second pivot joint 114. The first pivot joint 112 and/or the second pivot joint 114 may comprise a ball (i.e. spherical) joint.

As also illustrated in figures 2, 4, 5, 8 to 11 the vehicle body 168 may be coupled to each of the first track assembly 102 and the second track assembly 104 via a third pivot joint 116 which couples the spreader bar 110 to the vehicle body 168.

The third pivot joint 116 may be the only feature by which the vehicle body 168 is coupled to the spreader bar 110. That is to say, the vehicle body 168 may be pivotably coupled to the spreader bar 110 in only the location defined by the third pivot joint 116.

As illustrated in figures 2, 4, 5, the vehicle body 168 may be coupled to each of the first track assembly 102 and the second track assembly 104 via a fourth pivot joint 126 and a fifth pivot point joint 129 which couple the vehicle body 168 to the cross member 118. Also as illustrated in figures 2, 4, 5, the vehicle body 168 may be coupled to each of the first track assembly 102 and the second track assembly 104 via a fourth pivot joint 126 and a fifth pivot point joint 129 which couple the vehicle body 168 to the cross member 118.

As illustrated in figure 8, the actuator system 300 may comprise a first spreader bar actuator 500 which extends between the spreader bar 110 and the vehicle body 168 such that the first spreader bar actuator 500 is operable to react against the vehicle body 168 to induce a force F on the spreader bar.

The actuator system 300 may comprise a second spreader bar actuator 502 which extends between the spreader bar 110 and the vehicle body 168 such that the second spreader bar actuator 502 is operable to react against the vehicle body 168 to induce a force F on the spreader bar 110.

The first spreader bar actuator 500 may be spaced apart from the second spreader bar actuator 502 along the length of the spreader bar 110 such that the first spreader bar actuator 500 is provided closer to the first track assembly 102 than to the second track assembly 104, and the second spreader bar actuator 502 is provided closer to the second track assembly 104 than to the first track assembly 102. The first spreader bar actuator 500 may be proximate to the first track assembly 102. The second spreader bar actuator 502 may be provided proximate to the second track assembly 104.

The actuator system 300 may be configured and located to induce the force F on the spreader bar 110 closer to the first track assembly 102 or the second track assembly 104 than to a mid point along the spreader bar 110 between the first track assembly 102 and the second track assembly 104.

The first spreader bar actuator 500 and (where provided) the second spreader bar actuator 502 may be of any suitable configuration. For example, the first spreader bar actuator 500 and (where provided) the second spreader bar actuator 502 may each comprise a hydraulic ram 510, 512, as illustrated in figures 3, 8.

The first spreader bar actuator 500 and (where provided) the second spreader bar actuator 502 may each further comprise a resilient biasing unit 520, 522 530, 532. The resilient biasing unit 520, 522, 530, 532 is provided in the load path of the respective spreader bar actuator 500, 502. Hence the first spreader bar actuator 500 and (where provided) the second spreader bar actuator 502 may each comprise a force generating unit (e.g. a hydraulic ram 510, 512) and a resilient biasing unit 520, 522, 530, 532 coupled so that a force F may be applied to the spreader bar 110 without causing the vehicle body 168 and spreader bar 110 to move relative to one another.

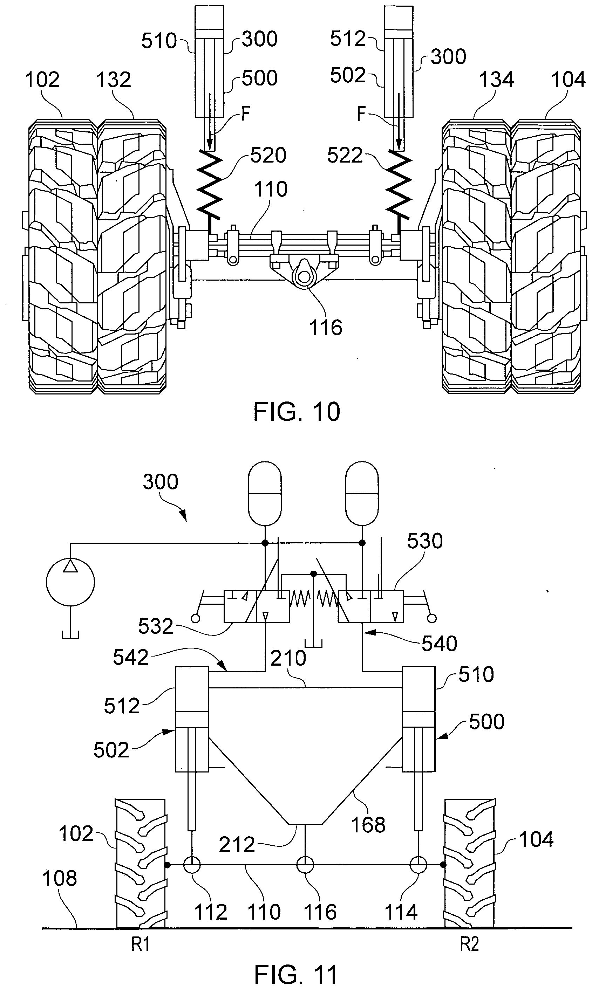

As illustrated in figure 11, a first resilient biasing unit 530 may be provided as an accumulator in a first hydraulic circuit 540 which is operable to activate (i.e. power) the first hydraulic ram 510. As illustrated in figure 11, a second resilient biasing unit 532 may be provided as an accumulator in a second hydraulic circuit 542 which is operable to activate (i.e. power) the second hydraulic ram 512.

As illustrated in figure 10, a third resilient biasing unit 520 may be provided as a spring located between the first hydraulic ram 510 and the spreader bar 110. As illustrated in figure 10, a fourth resilient biasing unit 522 may be provided as a spring located between the second hydraulic ram 512 and the spreader bar 110.

As illustrated in figure 8, 10, the actuator system 300 may be operable to selectively induce a force F acting on the spreader bar 110 in a direction towards the substrate 108. That is to say, the actuator system 300 may have a first mode of operation in which no force is induced and a second mode of operation in which the force (F) is induced.

By inducing a force F acting on the spreader bar 110 in a direction towards the substrate 108, the actuator system 300 will affect (and hence control) the distribution of track pressure Pt acting between the vehicle 100 and the substrate 108 along the continuous drive track 132, 134 of each of the first track assembly 102 and the second track assembly 104. Since the first track assembly 102 and the second track assembly 104 may be pivotably mounted to the vehicle body 168 via the spreader bar 110 via the first pivot joint 112 and the second pivot joint 114, and pivotably mounted to the vehicle body 168 via the spreader bar 110 via cross member 118 via a fourth pivot joint 126 and/or a fifth pivot joint 129, a force induced by one of the hydraulic rams 510, 512 will bias the distribution of track pressure Pt towards the end of the continuous drive track 132, 134 closest to the ram 510, 512 inducing the force (i.e. at the spreader bar 110 end of the continuous drive track), and (on the other continuous drive track) result in a bias in the distribution of track pressure Pt towards the other end of the continuous drive track 132, 134 (i.e. at the cross bar 118 end of the continuous drive track).

Hence the distribution of track pressure Pt acting between the vehicle 100 and the substrate 108 may be altered from that shown in figure 6 to that shown in figure 7 and figure 9.

The value of the force F induced may be variable in dependence of the actuator control signal Sac to thereby control rotation of the vehicle body 168 in the x-y plane defined by the x-axis and y-axis.

As illustrated in figure 2, the third pivot joint 116 may be fixed relative to the spreader bar 110, for example at or towards the centre of the spreader bar 110. In the same example, the fourth pivot joint 126 may be configured to be constrained to pivot about a first position P1 on the cross member 118 and the fifth pivot joint 129 may be configured to be constrained to pivot about a third position P3 on the cross member 118.

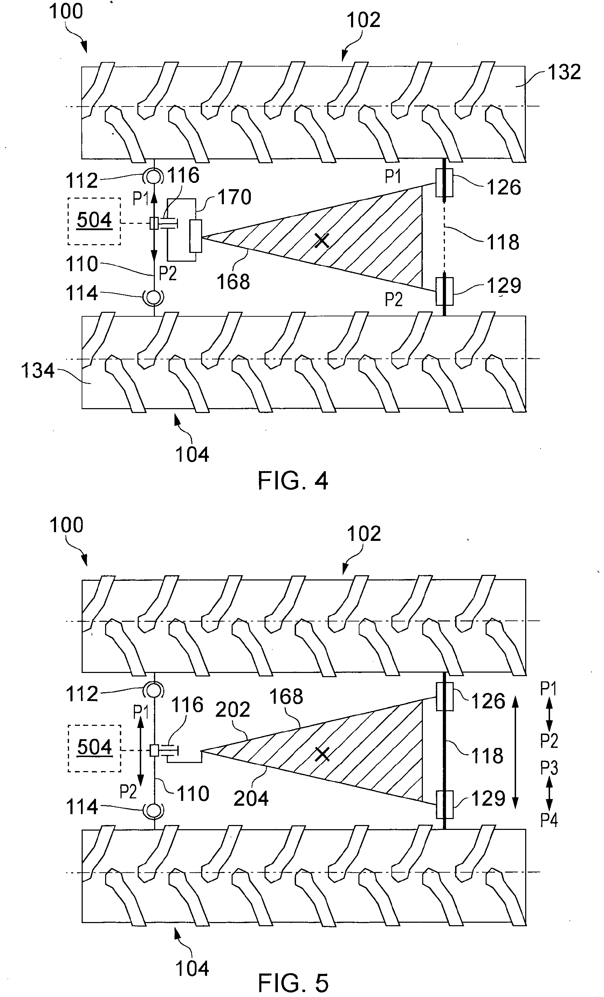

As illustrated in figures 4, 5, the third pivot joint 116 may be configured to be moveable along the spreader bar 110 between a first position P1 on the spreader bar 110 and second position P2 on the spreader bar 110.

The actuator system 300 may be operable to move the third pivot joint 116 along the spreader bar 110 between the first position P1 and the second position P2 so as to control the distribution of track pressure Pt acting between the vehicle 100 and the substrate 108 along the continuous drive track 132, 134 of each of the first track assembly 102 and the second track assembly 104.

In the example of figure 4, the fourth pivot joint 126 may be configured to be constrained to pivot about a first position P1 on the cross member 118. The fifth pivot joint 129 may be configured to be constrained to pivot about a third position P3 on the cross member 118. In the same example, the third pivot joint 116 may be coupled to the vehicle body 168 via a mounting rail 170, the mounting rail 170 extending parallel to the spreader bar 110 (for example in the y-axis) and being fixed relative to the vehicle body 168. The third pivot point joint 116 may be slidably mounted to the spreader bar 110 and the third pivot point joint 116 may be slidably mounted to the mounting rail 170 such that as the third pivot joint 116 moves along the spreader bar 100 and the mounting rail 170, the third pivot joint 116 moves relative to (i.e. along) the spreader bar 110 between the first position P1 and the second position P2 on the spreader bar 110.

In the example of figure 5, the fourth pivot joint 126 may be configured to be moveable along the cross member 118 between a first position P1 and second position P2 on the cross member 118. The fifth pivot joint 129 may be configured to be moveable along the cross member 118 between a third position P3 and fourth position P4 on the cross member 118. Hence, at the same time as the third pivot joint 116 moves along (i.e. relative to) the spreader bar 110 between the first position P1 and the second position P2 on the spreader bar 110, the fourth pivot joint 126 moves along (i.e. relative to) the cross member 118 between the first position P1 and the second position P2 on the cross member 118 and the fifth pivot joint 129 moves along (i.e. relative to) the cross member 118 between a third position P3 and fourth position P4 on the cross member 118.

As shown in figures 4, 5, the actuation system 300 may comprise a third-pivot joint actuator 504 mounted and configured to move the third pivot joint 116 along the spreader bar 110 between the first position P1 and the second position P2 in dependence of the actuator control signal Sac.

In the example of figure 4, as the third pivot joint actuator 504 moves the third pivot joint 116 along (i.e. relative to) the spreader bar 110 between the first position P1 and the second position P2 by moving the third pivot joint 116 along the mounting rail 170, the fourth pivot joint 126 remains at the first position P1 and the fifth pivot joint 129 remains at the third position P3 on the cross member 118. That is to say, in the example of figure 4, as the third pivot joint actuator 504 moves the third pivot joint 116 along the spreader bar 110 towards the first track assembly 102 or towards the second track assembly 104 by moving the third pivot joint 116 along (i.e. relative to) the mounting rail 170, the fourth pivot joint 126 remains at the first position P1 and the fifth pivot joint 129 remains at the third position P3 on the cross member 118.

In the example of figure 5, as the third pivot joint actuator 504 moves the third pivot joint 116 along (i.e. relative to) the spreader bar 110 between the first position P1 and the second position P2, the fourth pivot joint 126 is moved along the cross member 118 between the first position P1 and the second position P2 on the cross member 118, and the fifth pivot joint 129 is moved along the cross member 118 between the third position P3 and the fourth position P4 on the cross member 118. That is to say, in the example of figure 5, as the third pivot joint actuator 504 moves the third pivot joint 116 along (i.e. relative to) the spreader bar 110 towards the first track assembly 102, the fourth pivot joint 126 is moved along the cross member 118 towards the first track assembly 102, and the fifth pivot joint 129 is moved along the cross member 118 towards the first track assembly 102. Likewise, as the third pivot joint actuator 504 moves the third pivot joint 116 along (i.e. relative to) the spreader bar 110 towards the second track assembly 104, the fourth pivot joint 126 is moved along the cross member 118 towards the second track assembly 104, and the fifth pivot joint 129 is moved along the cross member 118 towards the second track assembly 104.

The distance between the first position P1 and the second position P2 on the spreader bar 110 may be at least 10% but not more than 35% of the length of the spreader bar 110. The distance between the first position P1 and the second position P2 on the spreader bar 110 may be at least 15% but not more than 25% of the length of the spreader bar 110.

The first position P1 may be located at least 5% but no more than 40% of the way along the spreader bar 110 from the first track assembly 102 to the second track assembly 104. The first position P1 may be located at least 15% but no more than 35% of the way along the spreader bar 110 from the first track assembly 102 to the second track assembly 104.

The second position P2 may be located at least 5% but no more than 40% of the way along the spreader bar 110 from the second track assembly 104 to the first track assembly 102. The second position P2 may be located at least 15% but no more than 35% of the way along the spreader bar 110 from the second track assembly 104 to the first track assembly 102.

In a further example, as illustrated in figure 12, each track assembly 102, 104 may further comprise a track support member 140 provided between the first track support wheel 128 and the second track support wheel 130. The track support member 140 may be provided as a rollable element, for example a wheel. The track support member 140 may be located such that it is spaced apart from the substrate 108 by the continuous drive track 132, 134. The actuator system 300 may be operable to induce a force F on the track support member 140 towards the substrate 108 to alter the distribution of the track pressure Pt along the continuous drive track 132, 134.

As illustrated in figure 12, each track assembly 102, 104 may further comprise one or more additional track support members 140 provided between the first track support wheel 128 and the second track support wheel 130. Each additional track support member 140 may be located such that it is spaced apart from the substrate 108 by the continuous drive track 132, 134. The actuator system 300 may be operable to induce a force F on each track support member 140 independently of each other track support member 140.

The or each track support member 140 may be provided with a track support member actuator 506 which forms part of the actuation system 300. The or each track support member actuator 506 may be mounted and configured to induce a force F on its respective track support member 140 in dependence of the actuator control signal Sac. The track support member actuator 506 may be of any conventional kind, for example hydraulically or electrically powered.

In examples in which there are provided a plurality of track support members 140, each with a dedicated a track support member actuator 506, the actuator system 300 may be operable to induce the same or different force F on each track support member 140 to alter the distribution of the track pressure Pt along the continuous drive track 132, 134.

Hence, for example, the distribution of track pressure Pt along the continuous drive track 132, 134 may be controlled by controlling the force F induced by each actuator 506.

As illustrated in figure 13, during operation of the vehicle, in a first step 600, the direction control system 400 may detect an unscheduled lateral movement of the vehicle 100.

For example, in a scenario in which the vehicle is travelling along an incline as shown in figure 1, traction between the first track assembly 102 and the substrate 108 may be lower than traction between the second track assembly 104 and the substrate 108. The centre of gravity of the vehicle 100 may have a substantially central position on the vehicle body 168 and may determine the location of a downward force of the vehicle 100 acting towards the substrate 108. This is shown schematically by a downward arrow in Figure 1. As can be seen in figure 1, a component of the downward force may urge the vehicle 100 down the incline, causing it to slide fully laterally or to turn because either the front end or rear end of the first track assembly 102 drifts down the incline.

The vehicle 100 may be coupled with an agricultural tool 106 to form an agricultural equipment assembly 2000. The agricultural tool 106 may be operable to engage with the substrate 108 or engage with an object coupled to the substrate 108, such that the agricultural tool 106 exerts a force on the vehicle 1000 during the engagement.

For example, and as shown in figure 1, the agricultural tool 106 may be a tilling tool mounted off the back of the vehicle 100. During operation the tilling 100 is engaged with the substrate 108, and this may also cause the vehicle to be steered left and/or right (e.g. clockwise and/or anticlockwise about the z-axis) if the ground the tool is engaged with has an uneven consistency, or because the tool becomes disengaged with the ground along its length.

In another example, the agricultural tool 106 may be a plant processing tool mounted off the back of the vehicle 100, designed to perform an operation on (for example removing fruit and/or cutting branches of) plants growing in the substrate 108. Other examples of plant processing tools are defoliators, pruners and trimmers, mowers to remove/cut grass and/or herbs in between the crops or the rows of crop and sprayers to treat the crops and/or non-crop plants in the field. During operation the plant processing tool is engaged with the plants, and this may also cause the vehicle to be steered left and/or right (e.g. clockwise and/or anticlockwise about the z-axis) as the tool engages and disengages with the plants.

In response, in a second step 602 the direction control system 400 generates a direction control signal Sac in response to the direction control system 400 detecting an unscheduled lateral movement of the vehicle 100.

For example, if at least part of the vehicle drifts sideways (e.g. moving along the y-axis when the vehicle is moving in the direction of the x-axis), causing the vehicle to steer away from the desired direction of travel (e.g. rotating about the z-axis), the direction control system 400 generates a direction control signal Sac.

In a third step 604 the direction control system 400 transmits the direction control signal Sac and the actuator system 300 receives the direction control signal Sac from the direction control system 400.

In a fourth step 606, in dependence of (i.e. based on) the direction control signal Sac, the actuator system 300 alters the distribution of track pressure Pt along the continuous drive track 132 of the first track assembly 102 and/or alters a distribution of track pressure Pt along the continuous drive track 134 of the second track assembly 104 to thereby control rotation of the vehicle body 168 in the x-y plane defined by the x-axis and y-axis (e.g. control yaw of the vehicle body 168 about the z-axis / yaw axis). In this way the system may correct the drifting/turning motion and correct the direction of travel of the vehicle 100.

The method of operation of the vehicle may comprise the steps of engaging the agricultural tool 106with a substrate 108 or engaging the agricultural tool 106 with an object coupled to a substrate 108, such that the agricultural tool 106 exerts a tool force (Ft) on the vehicle 1000 during the engagement, and controlling the actuation system 300 to control the direction of travel of vehicle 100 while the vehicle is moving and while the tool force is induced on the vehicle 100.

Hence in the examples of figures 2, 3, which (for the avoidance of doubt) may include the actuators 500, 502 of figures 8, 10 or 11, if the direction control system 400 detects the vehicle 100 is making an unscheduled drifting/turning motion clockwise about the z-axis (as viewed in the plan view, i.e. from above), it generates a direction control signal Sac which indicates the nature of the unscheduled drifting/turning motion. When the direction control signal Sac is received by the actuator system 300, the first spreader bar actuator 500 is operated to selectively induce a force F acting on the spreader bar 110 in a direction towards the substrate 108. This will cause the distributed track pressure Pt of the first track assembly 102 to be biased towards the spreader bar 110 end of the first track assembly 102, and cause the distributed track pressure Pt of the second track assembly 104 to be biased towards the cross bar 118 end of the second track assembly 104, causing the vehicle to turn anti-clockwise (as viewed in the plan view, i.e. from above) about the z-axis to thereby correct the drifting/turning motion and correct the direction of travel of the vehicle 100.

Likewise, in the same example, if the direction control system 400 detects the vehicle 100 is making an unscheduled drifting/turning motion anti-clockwise about the z-axis (as viewed in the plan view, i.e. from above), it generates a direction control signal Sac which indicates the nature of the unscheduled drifting/turning motion. When the direction control signal Sac is received by the actuator system 300, the second spreader bar actuator 502 is operated to selectively induce a force F acting on the spreader bar 110 in a direction towards the substrate 108. This will cause the distributed track pressure Pt of the second track assembly 104 to be biased towards the spreader bar 110 end of the second track assembly 104, and cause the distributed track pressure Pt of the first track assembly 102 to be biased towards the cross bar 118 end of the first track assembly 102, causing the vehicle to turn clockwise about the z-axis to thereby correct the drifting/turning motion and correct the direction of travel of the vehicle 100.

In the example of figure 4, if the direction control system 400 detects the vehicle 100 is making an unscheduled drifting/turning motion clockwise about the z-axis (as viewed in the plan view, i.e. from above), it generates a direction control signal Sac which indicates the nature of the unscheduled drifting/turning motion. When the direction control signal Sac is received by the actuator system 300, the third pivot joint actuator 504 moves the third pivot joint 116 along the spreader bar 110 and the mounting rail 170 towards the first track assembly 102 with the fourth pivot joint 126 remaining at the first position P1 and the fifth pivot joint 129 remaining at the third position P3 on the cross member 118. This shifts the weight distribution of the vehicle 100 so that there is more force applied to the spreader bar 110 end of the first track assembly 102. This will cause the distributed track pressure Pt of the first track assembly 102 to be biased towards the spreader bar 110 end of the first track assembly 102, and cause the distributed track pressure Pt of the second track assembly 104 to be biased towards the cross bar 118 end of the second track assembly 104, causing the vehicle to turn anti-clockwise about the z-axis to thereby correct the drifting/turning motion and correct the direction of travel of the vehicle 100.

Likewise, in the example of figure 4, if the direction control system 400 detects the vehicle 100 is making an unscheduled drifting/turning motion anti-clockwise about the z-axis (as viewed in the plan view, i.e. from above), it generates a direction control signal Sac which indicates the nature of the unscheduled drifting/turning motion. When the direction control signal Sac is received by the actuator system 300, the third pivot joint actuator 504 moves the third pivot joint 116 along the spreader bar 110 and the mounting rail 170 towards the second track assembly 104 with the fourth pivot joint 126 remaining at the first position P1 and the fifth pivot joint 129 remaining at the third position P3 on the cross member 118. This shifts the weight distribution of the vehicle 100 so that there is more force applied to the spreader bar 110 end of the second track assembly 104. This will cause the distributed track pressure Pt of the first track assembly 102 to be biased towards the spreader bar 110 end of the second track assembly 104, and cause the distributed track pressure Pt of the first track assembly 102 to be biased towards the cross bar 118 end of the first track assembly 102, causing the vehicle to turn clockwise about the z-axis to thereby correct the drifting/turning motion and correct the direction of travel of the vehicle 100.

In the example of figure 5, if the direction control system 400 detects the vehicle 100 is making an unscheduled drifting/turning motion clockwise about the z-axis (as viewed in the plan view, i.e. from above), it generates a direction control signal Sac which indicates the nature of the unscheduled drifting/turning motion. When the direction control signal Sac is received by the actuator system 300, the third pivot joint actuator 504 moves the third pivot joint 116 along the spreader bar 110 towards the first track assembly 102, moves the fourth pivot joint 126 along the cross member 118 towards the first track assembly 102, and moves the fifth pivot joint 129 along the cross member 118 towards the first track assembly 102. This shifts the weight distribution of the vehicle 100 so that there is more force applied to the spreader bar 110 end of the first track assembly 102. This will cause the distributed track pressure Pt of the first track assembly 102 to be biased towards the spreader bar 110 end of the first track assembly 102, and cause the distributed track pressure Pt of the second track assembly 104 to be biased towards the cross bar 118 end of the second track assembly 104, causing the vehicle to turn anti-clockwise about the z-axis to thereby correct the drifting/turning motion and correct the direction of travel of the vehicle 100.

Likewise, in the same example, if the direction control system 400 detects the vehicle 100 is making an unscheduled drifting/turning motion anti-clockwise about the z-axis (as viewed in the plan view, i.e. from above), it generates a direction control signal Sac which indicates the nature of the unscheduled drifting/turning motion. When the direction control signal Sac is received by the actuator system 300, the third pivot joint actuator 504 moves the third pivot joint 116 along the spreader bar 110 towards the second track assembly 104, moves the fourth pivot joint 126 along the cross member 118 towards the second track assembly 104, and moves the fifth pivot joint 129 along the cross member 118 towards the second track assembly 104. This shifts the weight distribution of the vehicle 100 so that there is more force applied to the spreader bar 110 end of the second track assembly 104. This will cause the distributed track pressure Pt of the first track assembly 102 to be biased towards the spreader bar 110 end of the second track assembly 104, and cause the distributed track pressure Pt of the first track assembly 102 to be biased towards the cross bar 118 end of the first track assembly 102, causing the vehicle to turn clockwise about the z-axis to thereby correct the drifting/turning motion and correct the direction of travel of the vehicle 100.

In the example of figure 12, if the direction control system 400 detects the vehicle 100 is making an unscheduled drifting/turning motion clockwise about the z-axis (as viewed in the plan view from above), it generates a direction control signal Sac which indicates the nature of the unscheduled drifting/turning motion. When the direction control signal Sac is received by the actuator system 300, the or each track support member actuator 506 of the first track assembly 102 may be operated induce a force F on its respective track support member 140 such that the distributed track pressure Pt of the first track assembly 102 is biased towards the spreader bar 110 end of the first track assembly 102. At the same time, the distributed track pressure Pt of the second track assembly 104 may be biased towards the cross bar 118 end of the second track assembly 104. This causes the vehicle to turn anti clockwise about the z-axis to thereby correct the drifting/turning motion and correct the direction of travel of the vehicle 100.

Likewise, in the example of figure 12, if the direction control system 400 detects the vehicle 100 is making an unscheduled drifting/turning motion anti-clockwise about the z-axis (as viewed in the plan view, i.e. from above), it generates a direction control signal Sac which indicates the nature of the unscheduled drifting/turning motion. When the direction control signal Sac is received by the actuator system 300, the or each track support member actuator 506 of the second track assembly 104 may be operated induce a force F on its respective track support member 140 such that the distributed track pressure Pt of the second track assembly 104 is biased towards the spreader bar 110 end of the second track assembly 104. At the same time, the distributed track pressure Pt of the first track assembly 102 may be biased towards the cross bar 118 end of the first track assembly 102. This causes the vehicle to turn clockwise about the z-axis to thereby correct the drifting/turning motion and correct the direction of travel of the vehicle 100.

The provision of the actuator system 300 operable to vary the distribution of the track pressure along the continuous drive track of each of the first and second track assembly allows the friction/traction at positions along each continuous drive track to be adjusted, allowing for direction of travel of the vehicle 100 to be corrected. The vehicle may thus have improved manoeuvrability compared to a vehicle having a direction of movement controlled by differential steering alone.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A vehicle (100) comprising a vehicle body (168) which extends along an x-axis, a first end (206) of the vehicle body (168) and a second end (208) of the vehicle body (168) being spaced apart from one another along the x-axis; the vehicle body (168) extending along a y-axis, a first side (202) of the vehicle body (168) and a second side (204) of the vehicle body (168) spaced apart from one another along the y-axis; the x-axis being at right angles to the y-axis; the vehicle body (168) extending along a z-axis, the z-axis being at right angles to the x-axis and y-axis, an upper side (210) of the vehicle body (168) and a lower side (212) of the vehicle body (168) spaced apart from one another along the z-axis;
wherein along the first side (202) and the second side (204) of the vehicle body (168) there are provided a first track assembly (102) and a second track assembly (104) respectively, each of the first track assembly (102) and the second track assembly (104) being coupled to the vehicle body (168) so as to support the vehicle body (168) above a substrate (108), and each of the first track assembly (102) and the second track assembly (104) comprising:
a first track support wheel (128) and a second track support wheel (130) spaced apart from one another along the x-axis; and
a continuous drive track (132, 134) carried by the drive track support wheels (128, 130);
each continuous drive track (132, 134) configured for distributing a track pressure (Pt) induced by a downward force of the vehicle over the area of each continuous drive track (132, 134) in contact with the substrate (108) to thereby support the vehicle (100) on the substrate (108);
wherein the vehicle (100) further comprises an actuator system (300);
the actuator system (300) is operable to vary the distribution of the track pressure (Pt) along the continuous drive track (132) of the first track assembly (102); and
the actuator system (300) is operable to vary the distribution of the track pressure (Pt) along the continuous drive track (134) of the second track assembly (104).

2. The vehicle (100) as claimed in claim 1 wherein the z-axis defines a vehicle body yaw axis; and the vehicle (100) is operable to control yaw of the vehicle body (168) as the vehicle is moving :
by controlling the actuator system (300) to alter the distribution of the track pressure (Pt) along the continuous drive track (132) of the first track assembly (102); and/or by controlling the actuator system (300) to alter the distribution of the track pressure (Pt) along the continuous drive track (134) of the second track assembly (104).

3. The vehicle (100) as claimed in claim 2 wherein the vehicle (100) comprises a direction control system (400) operable to generate a direction control signal (Sac), the actuator system (300) being operable to:
receive the direction control signal (Sac) from the direction control system (400),
and in dependence of the actuator control signal (Sac) be operable to:
alter the distribution of the track pressure (Pt) along the continuous drive track (132) of the first track assembly (102) and/or
alter the distribution of the track pressure (Pt) along the continuous drive track (134) of the second track assembly (104)
to thereby control rotation of the vehicle body (168) in the x-y plane defined by the x-axis and y-axis.

4. The vehicle (100) as claimed in any one of claims 1 to 3 wherein the first track assembly (102) and the second track assembly (104) are pivotably mounted to the vehicle body (168) such that they are moveable relative to the vehicle body (168) and moveable relative to each other in a x-z plane defined by the x-axis and the z-axis.

5. The vehicle (100) as claimed in any one of the previous claims wherein the vehicle (100) further comprises:
a spreader bar (110) extending between, and coupled to, each of the first track assembly (102) and the second track assembly (104);
a cross member (118) extending between, and coupled to, each of the first track assembly (102) and the second track assembly (104);
the spreader bar (110) and the cross member (118) being spaced apart from one another in a direction along the x-axis; and
the actuator system (300) being operable to selectively induce a force (F) acting on the spreader bar (110) in a direction towards the substrate (108), so as to control the distribution of track pressure (Pt) acting between the vehicle (100) and the substrate (108) along the continuous drive track (132, 134) of each of the first track assembly (102) and the second track assembly (104).

6. The vehicle (100) as claimed in claim 5 when dependent on claim 3 wherein the value of the force (F) induced is variable in dependence of the actuator control signal (Sac) to thereby control rotation of the vehicle body (168) in the x-y plane defined by the x-axis and y-axis.

7. The vehicle (100) as claimed in any one of claims 5 to 6 wherein the actuator system (300) is configured and located to induce the force (F) on the spreader bar (110) closer to the first track assembly (102) or the second track assembly (104) than to a mid point along the spreader bar (110) between the first track assembly (102) and the second track assembly (104).

8. The vehicle (100) as claimed in any one of claims 5 to 7 wherein the spreader bar (110) is:
coupled to the first track assembly (102) by a first pivot joint (112); and
coupled to the second track assembly (104) by a second pivot joint (114).

9. The vehicle (100) of claim 8 wherein the first pivot joint (112) and/or the second pivot joint (114) comprises a ball joint.

10. The vehicle (100) as claimed in any one of claims 5 to 9 wherein the actuator system (300) comprises:
a first spreader bar actuator (500) which extends between the spreader bar (110) and the vehicle body (168) such that the first spreader bar actuator (500) is operable to react against the vehicle body (168) to induce a force (F) on the spreader bar; and
a second spreader bar actuator (502) which extends between the spreader bar (110) and the vehicle body (168) such that the second spreader bar actuator (502) is operable to react against the vehicle body (168) to induce a force (F) on the spreader bar (110);
the first spreader bar actuator (500) being spaced apart from the second spreader bar actuator (502) along the length of the spreader bar (110) such that:
the first spreader bar actuator (500) is provided closer to the first track assembly (102) than to the second track assembly (104); and
the second spreader bar actuator (502) is provided closer to the second track assembly (104) than to the first track assembly (102).

11. The vehicle (100) as claimed in any of claims 5 to 10 wherein the vehicle body (168) is coupled to each of the first track assembly (102) and the second track assembly (104) via:
a third pivot joint (116) which couples the spreader bar (110) to the vehicle body (168); and
a fourth pivot joint (126) and a fifth pivot point joint (129) which couples the vehicle body (168) to the cross member (118).

12. The vehicle (100) as claimed in claim 11 wherein the third pivot joint (116) is configured to be moveable along the spreader bar (110) between a first position (P1) and second position (P2) on the spreader bar (110); and
the actuator system (300) is operable to move the third pivot joint (116) along the spreader bar (110) between the first position (P1) and the second position (P2) so as to control the distribution of track pressure (Pt) acting between the vehicle (100) and the substrate (108) along the continuous drive track (132, 134) of each of the first track assembly (102) and the second track assembly (104).

13. The vehicle (100) as claimed in claim 12 when dependent on claim 3 wherein the actuation system (300) comprises a third pivot joint actuator (504) mounted and configured to move the third pivot joint (116) along the spreader bar (110) between the first position (P1) and the second position (P2) in dependence of the actuator control signal (Sac).

14. The vehicle (100) as claimed in claim 12 or claim 13 wherein:
the fourth pivot joint (126) is configured to be moveable along the cross member (118) between a first position (P1) and second position (P2) on the cross member (118); and
the fifth pivot joint (129) is configured to be moveable along the cross member (118) between a third position (P3) and fourth position (P4) on the cross member (118);
such that at the same time as the third pivot joint (116) moves along the spreader bar (110) between the first position (P1) and the second position (P2) on the spreader bar (110), the fourth pivot joint (126) moves along the cross member (118) between the first position (P1) and the second position (P2) on the cross member (118) and the fifth pivot joint (129) moves along the cross member (118) between a third position (P3) and fourth position (P4) on the cross member (118).

15. The vehicle (100) as claimed in claim 12 or claim 13 wherein:
the fourth pivot joint (126) is configured to be constrained to pivot about a first position (P1) on the cross member (118); and
the fifth pivot joint (129) is configured to be constrained to pivot about a third position (P3) on the cross member (118).

16. The vehicle (100) as claimed in claim 15 wherein:
the third pivot joint (116) is coupled to the vehicle body (168) via a mounting rail (170), the mounting rail (170) extending parallel to the spreader bar (110) and being fixed relative to the vehicle body (168), the third pivot point joint (116) being slideably mounted to the mounting rail (170)
such that as the third pivot joint (116) moves along the spreader bar (110) between the first position (P1) and the second position (P2), the third pivot joint (116) moves along the mounting rail (170).

17. The vehicle (100) as claimed in any one of claims 11 to 16 wherein the distance between the first position (P1) and the second position (P2) on the spreader bar (110) is at least 5% but not more than 25% of the length of the spreader bar (110).

18. The vehicle (100) as claimed in any one of claims 12 to 17 wherein:
the first position (P1) is located at least 15% but no more than 35% of the way along the spreader bar (110) from the first track assembly (102) to the second track assembly (104); and
the second position (P2) is located at least 15% but no more than 35% of the way along the spreader bar (110) from the second track assembly (104) to the first track assembly (102).

19. The vehicle (100) as claimed in any one of the previous claims wherein each track assembly (102, 104) further comprises a track support member (140) provided between the first track support wheel (128) and the second track support wheel (130); and the track support member (140) is located such that it is spaced apart from the substrate (108) by the continuous drive track (132, 134);
wherein the actuator system (300) is operable to induce a force (F) on the track support member (140) towards the substrate (108) to alter the distribution of the track pressure (Pt) along the continuous drive track (132, 134).

20. The vehicle (100) as claimed in claim 19 wherein each track assembly (102, 104) further comprises one or more additional track support members (140) provided between the first track support wheel (128) and the second track support wheel (130); each additional track support member (140) is located such that it is spaced apart from the substrate (108) by the continuous drive track (132, 134);
wherein the actuator system (300) is operable to induce a force (F) on each track support member (140) independently of each other track support member (140) and the actuator system (300) is operable to induce the same or different force (F) on each track support member (140) to alter the distribution of the track pressure (Pt) along the continuous drive track (132, 134).

21. The vehicle (100) as claimed in claim 20 wherein each track support member (140) is provided with a track support member actuator (506) which forms part of the actuation system (300),
wherein the or each track support member actuator (506) is mounted and configured to induce a force (F) on its respective track support member (140) in dependence of the actuator control signal (Sac).

22. The vehicle (100) as claimed in any one of claims 1 to 21 wherein each continuous drive track (132, 134) is configured to maintain a constant surface area in contact with the substrate (108).

23. The vehicle (100) as claimed in any one of claims 1 to 22 wherein the vehicle is provided as an agricultural vehicle.

24. An agricultural equipment assembly (2000) comprising the vehicle (100) as claimed in any one of claims 1 to 23 and an agricultural tool (106) coupled to the vehicle (100), the agricultural tool (106) operable to engage with the substrate (108) or engage with an object coupled to the substrate (108), such that the agricultural tool (106) exerts a force on the vehicle (1000) during the engagement.

25. A method of adjusting a direction of travel of a moving vehicle (100), the vehicle (100) comprising:
a vehicle body (168) supported on a first track assembly (102) and a second track assembly (104);
an actuator system (300);
a direction control system (400);
whereby in response to the direction control system (400) detecting an unscheduled lateral movement of the vehicle (100), the direction control system (400) generates a direction control signal (Sac);
the actuator system (300) receives the direction control signal (Sac) from the direction control system (400), and in dependence of the direction control signal (Sac), the actuator system (300):
alters a distribution of track pressure (Pt) along a continuous drive track (132) of the first track assembly (102) and/or
alters a distribution of track pressure (Pt) along the continuous drive track (134) of the second track assembly (104),
to thereby control rotation of the vehicle body (168) in the x-y plane defined by the x-axis and y-axis.

26. A method as claimed in claim 25 wherein an agricultural tool (106) is coupled to the vehicle (100), the method comprising the steps of engaging the agricultural tool (106) with a substrate (108) or engaging the agricultural tool (106) with an object coupled to a substrate (108), such that the agricultural tool (106) exerts a tool force (Ft) on the vehicle (1000) during the engagement, and controlling the actuation system (300) to control the direction of travel of vehicle (100) while the vehicle is moving and while the tool force is induced on the vehicle (100).
